# FASCICULE DE BREVET EUROPEEN

(11) **EP 0 947 139 B1**
(45) Date de publication et mention de la délivrance du brevet: **25.06.2003**
(21) Numéro de dépôt: 99400775.5
(22) Date de dépôt: 30.03.1999
(51) Int. Cl.: A22C 11/00, A23L 1/317

(54) **Procédé pour la préparation d'une portion de viande sechée**
Verfahren zur Herstellung eines Teils getrockneten Fleischs
Process to prepare a portion of dried meat

(30) Priorité: 01.04.1998 FR 9804217
(43) Date de publication de la demande: 06.10.1999
(73) Titulaire: Salaisons des Roches Blanches, 76450 Cany-Barville (FR)
(72) Inventeur: Malandain, Yvon, 76450 Cany-Barville (FR)
(74) Mandataire: de Saint-Palais, Arnaud Marie

(56) Documents cités:
- BE-A- 823 167
- FR-A- 666 984
- FR-A- 956 849
- FR-A- 2 584 577

## Description

La présente invention concerne un procédé pour la préparation d'une portion de viande séchée telle que de la saucisse sèche à "grignoter" ou à consommer lors d'apéritifs ou buffets.

D'une manière générale, on sait que la saucisse sèche est un mets apprécié des consommateurs. Dans un buffet ou lors d'apéritifs, elle est présentée en tranches voire parfois en cubes que le consommateur prend à la main pour les manger.

Ce mode de présentation présente de nombreux inconvénients : Il est peu hygiénique du fait des manipulations successives, notamment lors du tranchage, de la présentation des tranches dans les plats et de la consommation. Les tranches laissent des dépôts graisseux sur les objets avec lesquels ils se trouvent en contact et, en particulier, les doigts des consommateurs. Un autre inconvénient de ce type de présentation consiste en ce que, une fois en tranches, la saucisse ne peut plus être conservée.

Par ailleurs, on a déjà proposé notamment dans le brevet français FR 956849 un saucisson présenté comme un article de confiserie consistant en un saucisson de petite taille contenu dans un boyau en matière cellulosique transparente. Néanmoins, cette solution ne convient pas pour des saucissons secs devant subir un processus de séchage et de mûrissement que le boyau en matière cellulosique ne permet pas d'effectuer correctement.

L'invention a donc plus particulièrement pour but de mettre en valeur des portions de viande séchée tout en supprimant les inconvénients précédemment évoqués.

Elle propose, à cet effet, un procédé pour la préparation d'une portion de viande séchée, initialement enveloppée d'une peau fine, et présentant les dimensions d'un bonbon. Selon l'invention, ce procédé est caractérisé en ce qu'il consiste à inoculer au niveau de la peau des micro-organismes aptes à se développer lorsqu'ils se trouvent placés dans une atmosphère appropriée, en assurant la destruction de la peau puis à enrouler la portion de viande séchée dans un papier dont les deux extrémités sont ensuite tordues à la façon de papillotes de manière à confiner la portion de viande dans un volume légèrement ouvert dans lequel peut s'établir une atmosphère contrôlée propice au développement des micro-organismes de manière à obtenir la susdite destruction de la peau, ainsi qu'une action lypolitique permettant d'affiner la maturation finale de la viande séchée.

Avantageusement, les susdits micro-organismes pourront consister en des bactéries par exemple de type micrococci et/ou staphylococci et/ou en des mycéliums tels que, par exemple, des penicilliums nalgiovencis camembertii.

Bien entendu, l'invention concerne également les portions de viande séchée conditionnées conformément au procédé précédemment défini, ces portions présentant la taille de bonbons, enveloppés dans un papier peu perméable à l'air, voire même imperméable similaire à ceux utilisés pour les bonbons, enroulé et tordu à la façon de papillotes.

Avantageusement, la viande séchée pourra consister en de la saucisse sèche. Dans ce cas, sa surface pourra être traitée à l'aide d'un agent dessiccant de manière à présenter un état de surface similaire à celui d'une saucisse sèche traditionnelle.

Il apparaît clairement que l'invention va à l'encontre de préjugés de l'homme de l'art suscités par la nature de la viande séchée et, en particulier, de la saucisse sèche qui est graisseuse et qui doit être aérée en vue de sa conservation. En effet, l'idée d'envelopper un morceau de viande séchée à l'aide d'un papier perméable à l'air permettant l'aération de la saucisse est a priori rejetée du fait que le papier se trouve rapidement maculé par la graisse et, de ce fait, le conditionnement n'est plus présentable.

L'homme de l'art écarte spontanément l'usage d'un papier étanche qui n'assurerait pas la ventilation de la viande en la rendant impropre à la consommation.

En outre, le stockage des morceaux de saucisse dans des sacs ne paraît pas envisageable du fait qu'en se tassant les uns contre les autres, les morceaux de viande séchée ne seraient plus correctement ventilés.

Une autre raison pour laquelle l'homme de l'art ne sera pas amené à s'orienter vers la solution préconisée par l'invention tient au fait que les saucisses sèches traditionnelles sont enveloppées dans une peau, généralement un boyau, à ôter avant consommation.

Cette manipulation qui implique un contact des doigts avec la matière graisseuse de la saucisse, s'avère d'autant plus délicate à exécuter que la portion de saucisse est petite. En outre, une fois ôtée, la peau doit être recueillie en vue d'être jetée aux ordures.

Il s'agit là d'inconvénients suffisamment dissuasifs pour rejeter toute proposition s'orientant vers la solution selon l'invention.

L'invention surmonte ces préjugés et résout ces problèmes grâce au fait que :
- l'enroulement en papillotes à l'aide d'un papier imperméable ou peu perméable à l'air et à la graisse, laisse cependant subsister une aération : entre les deux bords de l'enroulement subsiste un espace laminaire suffisant pour l'aération, tandis que la nature du papier et le traitement effectué sur les morceaux de viande séchée empêchent toute possibilité de collage entre le papier et la viande,
- grâce à l'action contrôlée des micro-organismes inoculés en surface, la peau subit une destruction et n'a plus à être ôtée, laissant place à une croûte légèrement plus dure et recouverte d'une légère poudre,
- la mise en sac des morceaux de viande, à la façon des bonbons, est rendue possible du fait que les parties torsadées des papillotes empêchent toute possibilité de tassement et/ou de collage des morceaux, à l'intérieur du sac ; ici aussi, la ventilation de l'ensemble des morceaux de viande est garantie.

Un mode d'exécution de l'invention sera décrit ci-après, à titre d'exemple non limitatif, avec référence aux dessins annexés dans lesquels :
La figure 1 est une vue en perspective schématique montrant une portion de saucisse sèche conditionnée sous la forme d'un bonbon ;
Les figures 2 et 3 sont respectivement une coupe axiale et une coupe transversale de la portion de saucisse sèche représentée figure 1 ;
La figure 4 représente schématiquement un ensemble de portions conditionnées conformément à la figure 1 et disposées à la façon de bonbons à l'intérieur d'un sac ;
La figure 5 est une vue en perspective schématique d'une variante d'exécution d'une portion de saucisse sèche.

Dans cet exemple, les portions de saucisse sèche 1 présentent une forme elliptique de quelques centimètres de longueur, par exemple de 1,5 à 3 cm et un diamètre plus réduit par exemple de 1 à 2 cm. Leur composition est celle d'une saucisse sèche classique, avec cependant un hachage plus fin. Elles ont subi un séchage et présentent donc une consistance ferme avec une croûte 2 légèrement plus dure. La surface extérieure, relativement lisse, est recouverte d'une poudre de matière dessiccante 3, pouvant contenir des ingrédients tels que du poivre moulu.

Grâce à cette consistance, les portions de saucisse sèche 1 peuvent être enveloppées à l'aide d'un papier étanche 4 tel que, par exemple, du papier cellophane qui est enroulé autour de chaque portion et torsadé à ses extrémités à la façon de papillotes 5, 6.

Comme précédemment mentionné, en raison de la forme elliptique des portions 1, le papier 4 n'enveloppe pas étroitement la saucisse sèche. Au contraire, autour de la portion ainsi qu'au niveau des zones de papier en recouvrement, il subsiste des espaces intercalaires libres 7 dans lesquels l'air peut accéder et assurer ainsi une ventilation de la saucisse. Ce phénomène de ventilation est d'autant mieux assuré que la poudre en matière dessiccante 3 qui recouvre la saucisse interdit toute possibilité d'adhérence. Cette particularité permet d'éviter l'utilisation de papiers poreux qui présentent l'inconvénient d'absorber les substances graisseuses lors de leurs contacts avec la saucisse, et d'être très rapidement maculés, rendant ainsi la portion impropre à la vente.

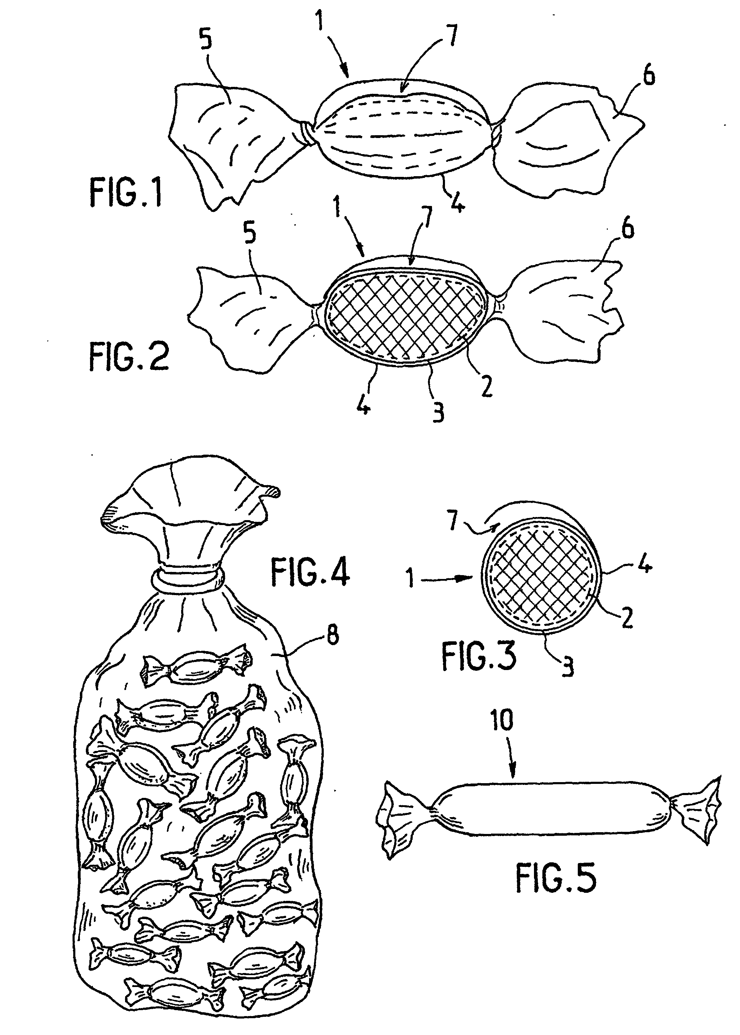

Un autre avantage important de l'invention réside dans le fait qu'en raison des papillotes 5, 6, les portions de saucisse 1 enveloppées dans leur papier 4 peuvent être disposées dans des sacs 8 (figure 4) similaires à des sacs de bonbons ; dans ce cas, les papillotes 5, 6 empêchent les portions de saucisse 1 de se tasser les unes sur les autres et garantissent la présence d'espaces libres intercalaires permettant d'assurer une bonne ventilation à l'intérieur du sac 8.

Avantageusement, le sac 8 pourra être étanche de manière à maîtriser l'affinage et la lipolyse des portions de saucisse, en évitant un séchage trop important. Cette lipolyse est notamment permise en raison de la présence des papillotes à l'intérieur du sac. Dans cet exemple, le sac est refermé par une soudure étanche.

Bien entendu, l'invention ne se limite pas au mode d'exécution précédemment décrit. Ainsi, comme illustré sur la figure 5, les portions de saucisse sèche 10 pourraient présenter une forme plus allongée, par exemple cylindrique.

De même, l'invention ne se limite pas à la saucisse sèche: Comme précédemment mentionné, elle peut également s'appliquer au jambon sec, aux viandes boucanées, etc... Dans ce cas, les portions pourront présenter des formes géométriques, par exemple parallélépipédiques.

## Revendications

1. Procédé pour la préparation d'une portion de viande séchée initialement enveloppée d'une peau fine et présentant les dimensions d'un bonbon,
**caractérisé en ce qu'**il consiste à inoculer sur la peau des micro-organismes aptes à se développer lorsqu'ils se trouvent placés dans une atmosphère appropriée, en assurant la destruction de la peau, et à enrouler la portion de viande séchée dans un papier dont les deux extrémités sont tordues à la façon de papillotes de manière à confiner la portion de viande dans un volume légèrement ouvert dans lequel peut s'établir une atmosphère contrôlée propice au développement des micro-organismes, de manière à obtenir la susdite destruction de la peau ainsi qu'une action lypolitique permettant d'affiner la maturation finale de la viande séchée.

2. Procédé selon la revendication 1,
**caractérisé en ce que** les susdits micro-organismes consistent en des bactéries par exemple de type micrococci et/ou staphylococci et/ou de mycéliums tels que, par exemple, les penicilliums nalgiovencis camembertii.

3. Procédé selon l'une des revendications 1 et 2,
**caractérisé en ce que**, préalablement à la phase d'enveloppement, il comprend un traitement de la surface de la portion de viande séchée à l'aide d'un agent dessiccant.

4. Procédé selon l'une des revendications précédentes,
**caractérisée en ce que** le susdit papier (4) est imperméable ou peu perméable à l'air.

5. Procédé selon la revendication 4,
**caractérisée en ce que** le susdit papier (4) est du papier cellophane.

6. Procédé selon l'une des revendications 4 à 5,
**caractérisée en ce que** la viande séchée est de la saucisse sèche.

7. Procédé selon la revendication 6, **caractérisée en ce que** sa surface est traitée à l'aide d'un agent dessiccant de manière à présenter l'aspect de la saucisse sèche traditionnelle.

8. Procédé selon la revendication 7,
**caractérisée en ce que** le susdit agent dessiccant (3) est sous forme de poudre.

9. Procédé selon l'une des revendications précédentes,
**caractérisée en ce que** la portion de viande séchée présente une section de forme elliptique.

10. Procédé selon l'une des revendications précédentes,
**caractérisée en ce que** la portion de viande séchée présente une forme cylindrique.

11. Procédé selon l'une des revendications précédentes,
**caractérisée en ce que** la viande séchée est du jambon sec.

12. Procédé selon l'une des revendications précédentes,
**caractérisée en ce que** la portion de viande séchée est contenue dans un sac sensiblement étanche à l'air.

## Claims

1. Process for the preparation of a dried meat portion initially wrapped in a thin film and having the dimensions of a sweet,
**characterised in that** it consists in inoculating the film with microorganisms likely to grow when placed in a suitable atmosphere, leading to destruction of the film, and **in that** the dried meat portion is wrapped in paper whose two ends are twisted in the form of frill so as to confine the meat portion in a slightly open volume in which a controlled atmosphere favourable to the growth of microorganisms is created, in order to encourage the above-mentioned destruction of the film as well as a lipolytic effect allowing the final maturation of the dried meat to take place.

2. Process according to claim 1
**characterised in that** the above-mentioned microorganisms consist of bacteria, for example micrococci and/or staphylococci and/or mycelium such as, for example, penicilliums nalgiovencis camembertii.

3. Process according to claims 1 and 2
**characterised in that**, prior to the wrapping phase, surface treatment of the dried meat portion is carried out using a desiccating agent.

4. Process according to one of the preceding claims
**characterised in that** said paper (4) is impermeable or only very slightly permeable to air.

5. Process according to claim 4
**characterised in that** said paper (4) is cellophane.

6. Process according to one of claims 4 to 5
**characterised in that** the dried meat is dried sausage.

7. Process according to claim 6
**characterised in that** its surface is treated with a desiccating agent such that it has the appearance of traditional dried sausage.

8. Process according to claim 7
**characterised in that** said desiccating agent (3) is in the form of a powder.

9. Process according to one of the preceding claims
**characterised in that** the dried meat portion has a section with an elliptical shape.

10. Process according to one of the preceding claims
**characterised in that** dried meat portion is cylindrical in shape.

11. Process according to one of the preceding claims
**characterised in that** the dried meat is ham.

12. Process according to one of the preceding claims
**characterised in that** the dried meat portion is contained in a substantially airtight bag.

## Patentansprüche

1. Verfahren zur Herstellung einer Portion getrockneten Fleischs, die zunächst mit einer dünnen Haut umhüllt ist und die Abmessungen eines Bonbons hat, **dadurch gekennzeichnet, dass** man Mikroorganismen auf die Haut aufimpft, die sich entwickeln können, wenn sie sich in einer geeigneten Atmosphäre befinden, und dabei gewährleistet, dass die Haut zerstört wird, und die Portion getrockneten Fleischs in ein Papier einrollt, dessen beide Enden nach Papillotenart gedreht werden, um die Fleischportion in einem leicht offenen Raum einzuschließen, in dem sich eine kontrollierte, für die Entwicklung der Mikroorganismen günstige Atmosphäre entwickeln kann, sodass die oben genannte Zerstörung der Haut und eine lipolytische Wirkung, die die Verbesserung der Endreifung des getrockneten Fleischs gestattet, erzielt werden können.

2. Verfahren nach Anspruch 1, **dadurch gekennzeichnet, dass** die oben genannten Mikroorganismen aus Bakterien wie beispielsweise Mikrokokken und/oder Staphylokokken und/oder aus Mycelien wie beispielsweise Penicillium nalgiovencis und/oder Penicillium camembertii bestehen.

3. Verfahren nach Anspruch 1 oder 2, **dadurch gekennzeichnet, dass** man vor dem Einhüllen die Oberfläche der Portion getrockneten Fleischs mit einem Trocknungsmittel behandelt.

4. Verfahren nach einem der vorhergehenden Ansprüche, **dadurch gekennzeichnet, dass** das oben genannte Papier (4) luftundurchlässig oder wenig luftdurchlässig ist.

5. Verfahren nach Anspruch 4, **dadurch gekennzeichnet, dass** das oben genannte Papier (4) Cellophanpapier ist.

6. Verfahren nach Anspruch 4 oder 5, **dadurch gekennzeichnet, dass** es sich bei dem getrockneten Fleisch um Trockenwurst handelt.

7. Verfahren nach Anspruch 6, **dadurch gekennzeichnet, dass** ihre Oberfläche so mit einem Trocknungsmittel behandelt wird, dass sie wie eine traditionelle Trockenwurst aussieht.

8. Verfahren nach Anspruch 7, **dadurch gekennzeichnet, dass** das oben genannte Trocknungsmittel (3) pulverförmig ist.

9. Verfahren nach einem der vorhergehenden Ansprüche, **dadurch gekennzeichnet, dass** die Portion getrockneten Fleischs einen elliptischen Querschnitt hat.

10. Verfahren nach einem der vorhergehenden Ansprüche, **dadurch gekennzeichnet, dass** die Portion getrockneten Fleischs eine zylindrische Form hat.

11. Verfahren nach einem der vorhergehenden Ansprüche, **dadurch gekennzeichnet, dass** es sich bei dem getrockneten Fleisch um Trockenschinken handelt.

12. Verfahren nach einem der vorhergehenden Ansprüche, **dadurch gekennzeichnet, dass** sich die Portion getrockneten Fleischs in einem im Wesentlichen luftdichten Beutel befindet.
